(19) **Europäisches Patentamt / European Patent Office / Office européen des brevets**

(11) **EP 2 891 867 B1**

(12) **FASCICULE DE BREVET EUROPEEN**

(45) Date de publication et mention
de la délivrance du brevet:
**21.12.2016 Bulletin 2016/51**

(51) Int Cl.:
***G01F 15/075*** (2006.01)   ***F24D 19/10*** (2006.01)

(21) Numéro de dépôt: **15150089.9**

(22) Date de dépôt: **05.01.2015**

(54) **Procédé d'estimation de consommation de gaz d'une installation de chaudière**

Verfahren zur Schätzung des Gasverbrauchs einer Gasheizkesselanlage

Method for estimating the gas consumption of a boiler plant

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.01.2014 FR 1450047**

(43) Date de publication de la demande:
**08.07.2015 Bulletin 2015/28**

(73) Titulaire: **Delta Dore**
**35270 Bonnemain (FR)**

(72) Inventeurs:
• **Villalard, Erwan**
**35270 BONNEMAIN (FR)**
• **Berhault, Gilles**
**35270 BONNEMAIN (FR)**
• **Tano, Ronan**
**35270 BONNEMAIN (FR)**
• **Monjaret, Christophe**
**35270 BONNEMAIN (FR)**

(74) Mandataire: **Le Guen-Maillet**
**5, place de Newquay**
**BP 70250**
**35802 Dinard Cedex (FR)**

(56) Documents cités:
**US-B2- 7 792 659   US-B2- 8 099 248**

**Description**

La présente invention concerne un procédé d'estimation de consommation de gaz d'une chaudière délivrant du chauffage et de l'eau chaude sanitaire, ainsi qu'une installation de chaudière mettant en oeuvre un tel procédé.

Une chaudière à gaz comporte classiquement un premier circuit délivrant du chauffage et un deuxième circuit délivrant de l'eau chaude sanitaire.

Actuellement, la consommation de gaz de la chaudière qui est relevée au compteur de gaz est une consommation globale qui englobe la consommation due à la production d'eau chaude sanitaire et la consommation due au chauffage.

L'usager est donc actuellement incapable de connaître la répartition entre la consommation due à la production d'eau chaude sanitaire et la consommation due au chauffage.

Un objet de la présente invention est de proposer un procédé d'estimation de consommation de gaz d'une chaudière délivrant du chauffage et de l'eau chaude sanitaire qui ne présente pas les inconvénients de l'art antérieur et qui en particulier permet à un usager d'estimer précisément la consommation de gaz pour chacun des deux modes que sont le chauffage et la production d'eau chaude sanitaire, et ceci d'une manière simple et ne nécessitant pas de travaux importants.

A cet effet, est proposé un procédé d'estimation de consommation de gaz d'une installation de chaudière comportant:

- une chaudière à gaz comportant un premier circuit délivrant du chauffage et un deuxième circuit délivrant de l'eau chaude sanitaire,
- un émetteur d'impulsions pour compteur gaz, qui, à chaque impulsion, délivre le volume de gaz consommé,
- un émetteur d'informations délivrant une information représentative du mode de fonctionnement de la chaudière, soit le mode chauffage, soit le mode eau chaude sanitaire,
- un émetteur d'état délivrant une information représentative de l'état de la chaudière, soit en marche, soit à l'arrêt, et
- une unité de calcul recevant les informations de chaque émetteur et destinée à estimer la consommation de gaz pour le chauffage et la consommation de gaz pour l'eau chaude sanitaire à partir de ces informations,

ledit procédé comportant, lorsqu'un coefficient de calibration CC pour l'un des modes a été préalablement calculé:
- une étape d'attente au cours de laquelle l'unité de calcul attend de recevoir de l'émetteur d'impulsions, l'information selon laquelle une impulsion été générée,
- une étape de récupération d'état au cours de laquelle l'unité de calcul récupère de l'émetteur d'état, l'état ou chaque état par lequel la chaudière est passée entre ladite impulsion et l'impulsion précédente,
- une étape de récupération de mode au cours de laquelle l'unité de calcul récupère de l'émetteur d'informations, le mode ou chaque mode par lequel la chaudière est passée entre ladite impulsion et l'impulsion précédente,
- une étape de récupération de consommation au cours de laquelle l'unité de calcul récupère de l'émetteur d'impulsions, la consommation totale de gaz CGT entre ladite impulsion et l'impulsion précédente,
- une première étape de test au cours de laquelle l'unité de calcul vérifie si la chaudière a été en état de marche entre ladite impulsion et l'impulsion précédente,

dans le cas négatif, le processus retourne à l'étape d'attente,
dans le cas positif,

- une deuxième étape de test au cours de laquelle l'unité de calcul vérifie si, pour les moments où la chaudière était en état de marche, elle est restée dans un seul mode entre ladite impulsion et l'impulsion précédente,

dans le cas positif,

- une première étape de cumul au cours de laquelle l'unité de calcul incrémente le compteur global dudit seul mode avec la consommation totale de gaz CGT,

dans le cas négatif,

- une étape de calcul de durée au cours de laquelle l'unité de calcul calcule, pour le mode correspondant au coefficient de calibration, la durée T pour laquelle la chaudière a été en état de marche et dans ledit mode,
- une première étape de calcul de consommation au cours de laquelle l'unité de calcul calcule, pour le mode correspondant au coefficient de calibration, la consommation de gaz pour ledit mode selon la formule $CG = CC \times T,$
- une deuxième étape de calcul de consommation au cours de laquelle l'unité de calcul calcule, pour l'autre mode, la consommation de gaz pour ledit autre mode selon la formule $CG' = CGT - CG,$ et
- une deuxième étape de cumul au cours de laquelle l'unité de calcul incrémente, pour chaque mode, le compteur global dudit mode avec la consommation de gaz ainsi calculée pour ledit mode et le processus retourne à l'étape d'attente.

Avantageusement, le calcul du coefficient de calibration CC d'un mode s'effectue, lorsque entre deux impulsions successives, la chaudière fonctionne uniquement dans ledit mode lorsqu'elle est en état de marche, selon la formule $CC = \dfrac{CG}{t}$ , où CG est la consommation de gaz entre les deux impulsions et où t est le temps durant lequel la chaudière reste en marche et dans ledit mode entre les deux impulsions.

L'invention propose également une installation de chaudière comportant:

- une chaudière à gaz comportant un premier circuit délivrant du chauffage et un deuxième circuit délivrant de l'eau chaude sanitaire,
- un émetteur d'impulsions pour compteur gaz, qui, à chaque impulsion, délivre le volume de gaz consommé,
- un émetteur d'informations délivrant une information représentative du mode de fonctionnement de la chaudière, soit le mode chauffage, soit le mode eau chaude sanitaire,
- un émetteur d'état délivrant une information représentative de l'état de la chaudière, soit en marche, soit à l'arrêt, et
- une unité de calcul comportant:
- des moyens de récupération d'état destinés à récupérer de l'émetteur d'état, l'état ou chaque état par lequel la chaudière est passée entre ladite impulsion et l'impulsion précédente,
- des moyens de récupération de mode destinés à récupérer de l'émetteur d'informations, le mode ou chaque mode par lequel la chaudière est passée entre ladite impulsion et l'impulsion précédente,
- des moyens de récupération de consommation destinés à récupérer de l'émetteur d'impulsions, la consommation totale de gaz CGT entre ladite impulsion et l'impulsion précédente,
- des premiers moyens de test destinés à vérifier si la chaudière a été en état de marche entre ladite impulsion et l'impulsion précédente,
- des deuxièmes moyens de test destinés à vérifier si, pour les moments où la chaudière était en état de marche, elle est restée dans un seul mode entre ladite impulsion et l'impulsion précédente,
- des premiers moyens de cumul destinés à incrémenter le compteur global dudit seul mode avec la consommation totale de gaz CGT,
- des moyens de calcul de durée destinés à calculer, pour le mode correspondant au coefficient de calibration, la durée T pour laquelle la chaudière a été en état de marche et dans ledit mode,
- des premiers moyens de calcul de consommation destinés à calculer, pour le mode correspondant au coefficient de calibration, la consommation de gaz pour ledit mode selon la formule CG = CC × T,
- des deuxièmes moyens de calcul de consommation destinés à calculer, pour l'autre mode, la consommation de gaz pour ledit autre mode selon la formule

CG' = CGT - CG, et
- des deuxièmes moyens de cumul destinés à incrémenter, pour chaque mode, le compteur global dudit mode avec la consommation de gaz calculée par les premiers moyens de calcul et les deuxièmes moyens de calcul, pour ledit mode.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une représentation schématique d'une installation de chaudière selon l'invention,
la Fig. 2 représente différents chronogrammes de l'installation de chaudière de la Fig. 1,
la Fig. 3 est un organigramme d'un procédé d'estimation selon l'invention, et
la Fig. 4 et la Fig. 5 sont des détails des chronogrammes de la Fig. 2 pour deux ensembles particuliers d'évènements.

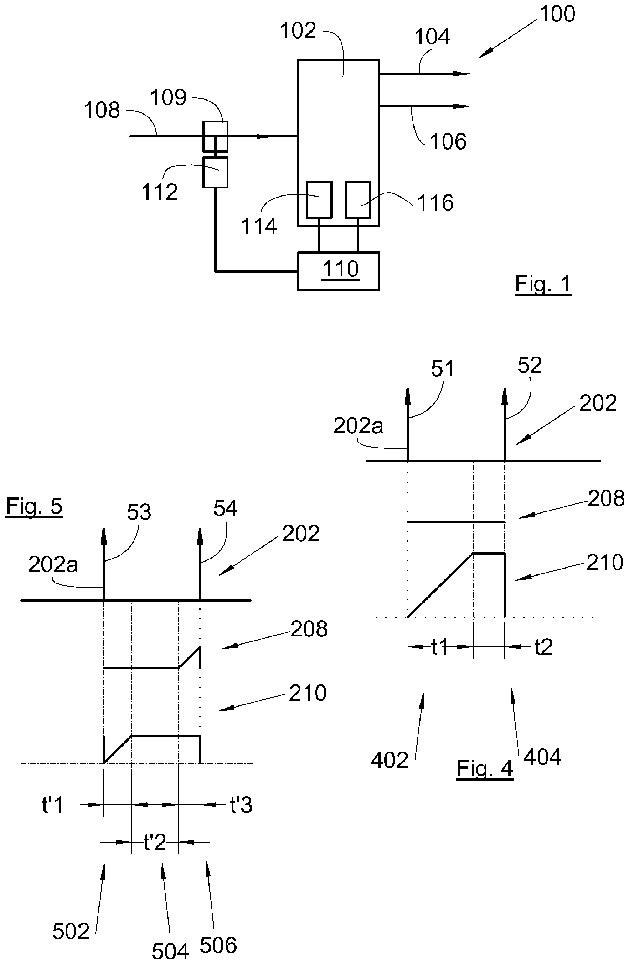

La Fig. 1 montre une installation de chaudière 100 comportant:

- une chaudière à gaz 102 raccordée à une canalisation d'alimentation en gaz 108 et comportant un premier circuit 104 délivrant du chauffage et un deuxième circuit 106 délivrant de l'eau chaude sanitaire,
- un émetteur d'impulsions 112 pour compteur gaz, qui, à chaque impulsion, délivre le volume de gaz consommé,
- un émetteur d'information 114 délivrant une information représentative du mode de fonctionnement de la chaudière 102, soit le mode chauffage, soit le mode eau chaude sanitaire,
- un émetteur d'état 116 délivrant une information représentative de l'état de la chaudière 102, soit en marche, soit à l'arrêt, et
- une unité de calcul 110 recevant les informations de chaque émetteur 112, 114, 116 et destinée à estimer la consommation de gaz pour le chauffage et la consommation de gaz pour l'eau chaude sanitaire à partir de ces informations.

L'émetteur d'impulsions 112 est connecté à un compteur de gaz 109 qui mesure la quantité de gaz qui circule dans la canalisation d'alimentation en gaz 108.

Le produit EM IC de la société Delta Dore est un exemple d'émetteur d'information 114.

La chaudière 102 présente trois possibilités, soit elle délivre de l'eau chaude sanitaire, soit elle délivre du chauffage, soit elle est à l'arrêt.

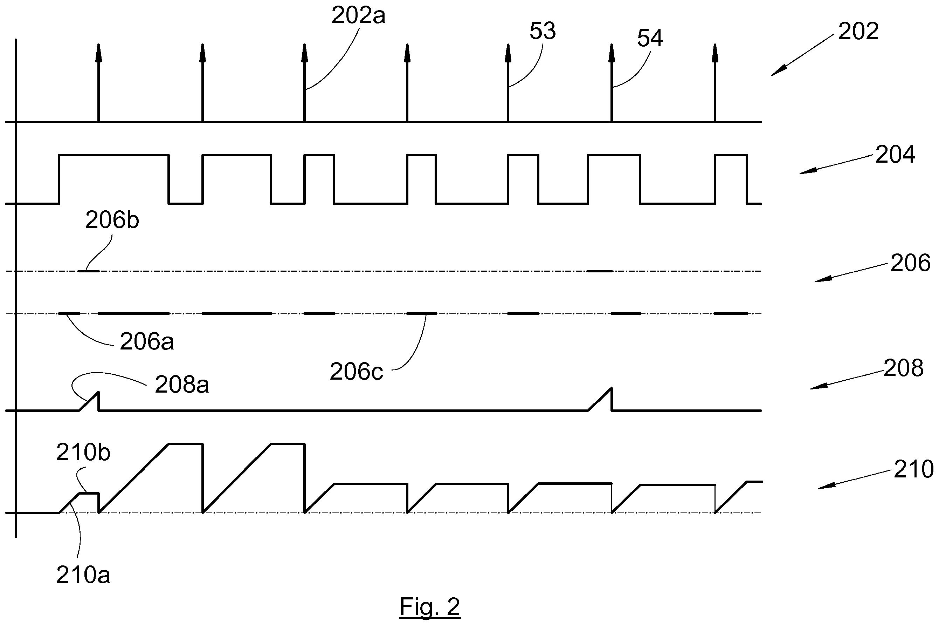

La Fig. 2 montre les chronogrammes des différents signaux de l'installation de chaudière 100.

Le chronogramme 202 est le chronogramme de l'émetteur d'impulsions 112 qui, à chaque impulsion 202a, délivre le volume de gaz consommé relevé par le compteur de gaz 109.

Le chronogramme 204 est le chronogramme de l'émetteur d'état 116. Lorsque le chronogramme 204 est à l'état haut, la chaudière 102 est en marche, et lorsque le chronogramme 204 est à l'état bas, la chaudière 102 est à l'arrêt.

Le chronogramme 206 est le chronogramme de l'émetteur d'information 114. Lorsque le chronogramme 206 est à l'état haut, la chaudière 102 est en mode eau chaude sanitaire, et lorsque le chronogramme 206 est à l'état bas, la chaudière 102 est en mode chauffage.

Le chronogramme 208 représente la mesure du temps qui s'écoule lorsqu'il y a production d'eau chaude sanitaire entre deux impulsions 202a.

Le chronogramme 210 représente la mesure du temps qui s'écoule lorsqu'il y a de la production de chauffage entre deux impulsions 202a.

A chaque impulsion 202a, les chronogrammes 208 et 210 redémarrent à zéro.

Entre deux impulsions 202a, lorsque la chaudière 102 est en mode chauffage (206a sur le chronogramme 206), le chronogramme 210 progresse linéairement (210a) incrémentant ainsi le temps au cours duquel la chaudière 102 est en mode chauffage, puis lorsque la chaudière 102 bascule en mode eau chaude sanitaire (206b sur le chronogramme 206), le chronogramme 210 cesse de progresser (210b), et le chronogramme 208 progresse linéairement (208a).

La Fig. 4 montre un détail des chronogrammes 202, 208 et 210 lorsque la chaudière 102 passe du mode chauffage (intervalle 402) à l'état arrêt (intervalle 404) entre deux impulsions 202a.

La Fig. 5 montre un détail des chronogrammes 202, 208 et 210 lorsque la chaudière 102 passe du mode chauffage (intervalle 502) à l'état arrêt (intervalle 504), puis au mode eau chaude sanitaire (intervalle 506) entre deux impulsions 202a.

Pour chaque mode, l'unité de calcul 110 contient un compteur global dudit mode qui comptabilise la consommation de gaz due audit mode.

Lorsqu'entre une première impulsion 202a et une deuxième impulsion 202a, la chaudière 102 est en état de marche et reste dans un même mode (chauffage ou eau chaude sanitaire), ou passe à l'état d'arrêt, la consommation de gaz entre ces deux impulsions est uniquement due audit mode et cette consommation peut être comptabilisée sur le compteur global de ce mode.

Par exemple, sur la Fig. 4, entre la première impulsion 51 et la deuxième impulsion 52, la chaudière 102 est en marche et en mode chauffage pendant une première durée $t_1$, et est à l'arrêt pendant une deuxième durée $t_2$, où $t_1 + t_2$ est égal au temps entre les deux impulsions 51 et 52. La consommation de gaz relevée au moment de la deuxième impulsion 52 est donc imputable uniquement au chauffage.

Lorsqu'entre une première impulsion 202a et une deuxième impulsion 202a, la chaudière 102 est en état de marche et passe d'un mode à l'autre, la consommation de gaz entre ces deux impulsions est due à ces deux modes et, pour chaque mode, la part de cette consommation due à ce mode doit être comptabilisée sur le compteur global de ce mode.

Par exemple, sur la Fig. 5, entre la première impulsion 53 et la deuxième impulsion 54, la chaudière 102 est en marche et en mode chauffage pendant une première durée $t_1'$, à l'arrêt pendant une deuxième durée $t_2'$, et en marche et en mode eau chaude sanitaire pendant une troisième durée $t_3'$, $t_1' + t_2' + t_3'$ est égal au temps entre les deux impulsions 53 et 54. La consommation de gaz relevée lors de la deuxième impulsion 54 est donc imputable au chauffage et à l'eau chaude sanitaire et doit être correctement répartie sur le compteur global propre à chaque mode.

Pour ce faire, il faut tenir compte du fait que, à temps de fonctionnement égal, le mode eau chaude sanitaire consomme plus de gaz que le mode chauffage.

A cette fin, il faut calibrer l'installation de chauffage 100 dans l'un des modes, lorsqu'entre deux impulsions 202a successives, la chaudière 102 fonctionne uniquement dans ledit mode lorsqu'elle est en état de marche.

Cette calibration s'effectue une fois pour toutes au démarrage, ou de manière régulière pour tenir compte des dérives dans le temps.

Par exemple, dans le cas de la Fig. 4, la chaudière 102 reste dans le mode chauffage durant la durée $t_1$ et la consommation de gaz $CG_0$ est égale à la différence entre la consommation de gaz relevée à la deuxième impulsion 52 et la consommation de gaz relevée à la première impulsion 51.

Le coefficient de calibration $CC_0$ pour le mode chauffage est alors $CC_0 = \dfrac{CG_0}{t_1}$ .

Le coefficient de calibration $CC_0$ peut alors être utilisé lorsque la chaudière 102 passe d'un mode à l'autre entre deux impulsions 202a.

Par exemple, dans le cas de la Fig. 5, la chaudière 102 passe du mode chauffage au mode eau chaude sanitaire, et la consommation de gaz $CG$ est égale à la différence entre la consommation de gaz relevée à la deuxième impulsion 55 et la consommation de gaz relevée à la première impulsion 53.

La consommation de gaz due au chauffage $CGG$ est égale à $CC_0 \times t_1'$ .

La consommation de gaz due à l'eau chaude sanitaire $CGE$ est égale à $CG-CGG$.

Ainsi, à chaque impulsion 202a, et pour chaque mode, il est possible d'ajouter la consommation de gaz due audit mode à la consommation propre audit mode.

Sur le même principe, la calibration peut être effectuée pour l'eau chaude sanitaire au lieu du chauffage, en calculant un coefficient de calibration pour l'eau chaude sanitaire.

Dans le cas d'un intervalle où la chaudière 102 passe d'un mode à l'autre, la consommation de gaz pour l'eau chaude sanitaire est alors calculée à partir de ce coefficient de calibration pour l'eau chaude sanitaire et du temps de fonctionnement en mode eau chaude sanitaire, et la consommation de gaz pour le chauffage est alors calculée par différence entre la consommation totale de gaz sur l'intervalle et la consommation de gaz pour l'eau chaude sanitaire dans l'intervalle.

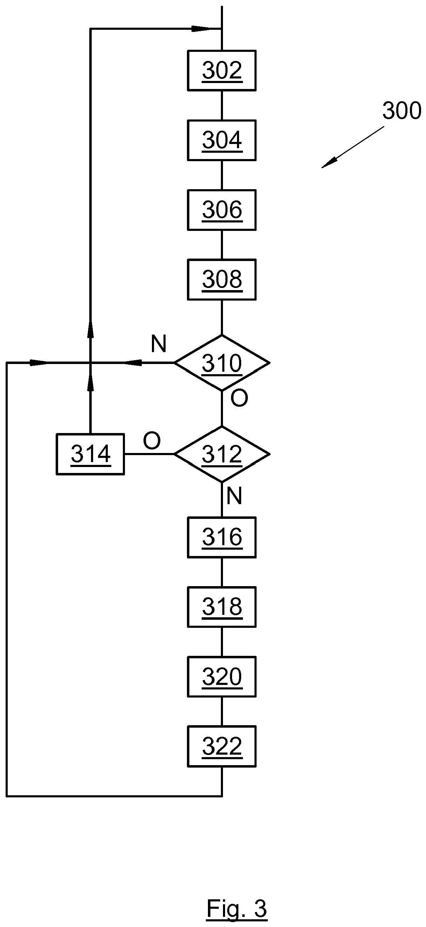

La Fig. 3 montre un organigramme d'un procédé d'estimation 300 de consommation de gaz selon l'invention qui comporte, lorsqu'un coefficient de calibration CC pour l'un des modes a été préalablement calculé:

- une étape d'attente 302 au cours de laquelle l'unité de calcul 110 attend de recevoir de l'émetteur d'impulsions 112, l'information selon laquelle une impulsion 202a a été générée,
- une étape de récupération d'état 304 au cours de laquelle l'unité de calcul 110 récupère de l'émetteur d'état 116, l'état ou chaque état par lequel la chaudière 102 est passée entre ladite impulsion 202a et l'impulsion 202a précédente,
- une étape de récupération de mode 306 au cours de laquelle l'unité de calcul 110 récupère de l'émetteur d'information 114, le mode ou chaque mode par lequel la chaudière 102 est passée entre ladite impulsion 202a et l'impulsion 202a précédente,
- une étape de récupération de consommation 308 au cours de laquelle l'unité de calcul 110 récupère de l'émetteur d'impulsions 112, la consommation totale de gaz CGT entre ladite impulsion 202a et l'impulsion 202a précédente,
- une première étape de test 310 au cours de laquelle l'unité de calcul 110 vérifie si la chaudière 102 a été en état de marche entre ladite impulsion 202a et l'impulsion 202a précédente,

dans le cas négatif, le processus retourne à l'étape d'attente 302,
dans le cas positif,

- une deuxième étape de test 312 au cours de laquelle l'unité de calcul 110 vérifie si, pour les moments où la chaudière 102 était en état de marche, elle est restée dans un seul mode entre ladite impulsion 202a et l'impulsion 202a précédente,

dans le cas positif,

- une première étape de cumul 314 au cours de laquelle l'unité de calcul 110 incrémente le compteur global dudit seul mode avec la consommation totale de gaz CGT,

dans le cas négatif,

- une étape de calcul de durée 316 au cours de laquelle l'unité de calcul 110 calcule, pour le mode correspondant au coefficient de calibration, la durée T pour laquelle la chaudière 102 a été en état de marche et dans ledit mode,
- une première étape de calcul de consommation 318 au cours de laquelle l'unité de calcul 110 calcule, pour le mode correspondant au coefficient de calibration, la consommation de gaz pour ledit mode selon la formule $CG = CC \times T,$
- une deuxième étape de calcul de consommation 320 au cours de laquelle l'unité de calcul 110 calcule, pour l'autre mode, la consommation de gaz pour ledit autre mode selon la formule $CG' = CGT - CG$, et
- une deuxième étape de cumul 322 au cours de laquelle l'unité de calcul 110 incrémente, pour chaque mode, le compteur global dudit mode avec la consommation de gaz ainsi calculée pour ledit mode et le processus retourne à l'étape d'attente 302.

Selon une première variante, la récupération des informations d'état lors de l'étape de récupération d'état 304 peut s'effectuer lors de la génération de l'impulsion 202a signifiant la fin de l'intervalle, l'émetteur d'état 116 enregistre alors ces informations d'état de manière continue dans une mémoire et les transmet d'un coup à l'unité de calcul 110 qui les récupère.

Selon une deuxième variante, la récupération des informations d'état lors de l'étape de récupération d'état 304 peut s'effectuer de manière continue vers l'unité de contrôle 110 qui les stocke dans une mémoire et les récupère lors de la génération de l'impulsion 202a signifiant la fin de l'intervalle.

Les informations de mode peuvent également être récupérées en une seule fois à la fin de l'intervalle ou de manière continue.

Selon une première variante, pour transmettre la consommation totale de gaz CGT entre ladite impulsion 202a et l'impulsion 202a précédente, l'émetteur d'impulsions 112 effectue la différence entre la consommation relevée à ladite impulsion 202a et la consommation relevée à l'impulsion 202a précédente, et l'unité de calcul 110 récupère alors uniquement cette différence.

Selon une deuxième variante, pour transmettre la consommation totale de gaz CGT entre ladite impulsion 202a et l'impulsion 202a précédente, l'émetteur d'impulsions 112 transmet la consommation relevée à ladite impulsion 202a et la consommation relevée à l'impulsion 202a précédente, et l'unité de calcul 110 effectue alors la différence entre ces deux données pour la récupérer.

L'unité de calcul 110 effectue le calcul des différentes durées à partir de la connaissance du chronogramme 202 de l'émetteur d'impulsions 112, du chronogramme 204 de l'émetteur d'état 116 et du chronogramme 206 de l'émetteur d'information 114.

Par exemple, entre l'impulsion 53 et l'impulsion 54, la chaudière 102 est en état de marche et en mode chauffage à partir de la première impulsion 53 et sur le début de l'intervalle (Fig. 2), l'unité de calcul 110 calcule alors la durée $t_1'$ (étape 316) correspondante. De la même manière, la chaudière 102 est en état de marche et en mode eau chaude sanitaire à partir du deuxième tiers de l'intervalle et jusqu'à la deuxième impulsion 54, l'unité de calcul 110 calcule alors la durée $t_3'$ (étape 316) correspondante. De la même manière, la chaudière 102 est en état d'arrêt à partir du premier tiers de l'intervalle et jusqu'au deuxième tiers de l'intervalle, l'unité de calcul 110 calcule alors la durée $t_2'$ (étape 316) correspondante.

Afin de mettre en oeuvre le procédé d'estimation 300, l'unité de calcul 110 comporte:

- des moyens d'attente destinés à attendre la réception depuis l'émetteur d'impulsions 112, d'une information selon laquelle une impulsion 202a a été générée,
- des moyens de récupération d'état destinés à récupérer de l'émetteur d'état 116, l'état ou chaque état par lequel la chaudière 102 est passée entre ladite impulsion 202a et l'impulsion 202a précédente,
- des moyens de récupération de mode destinés à récupérer de l'émetteur d'information 114, le mode ou chaque mode par lequel la chaudière 102 est passée entre ladite impulsion 202a et l'impulsion 202a précédente,
- des moyens de récupération de consommation destinés à récupérer de l'émetteur d'impulsions 112, la consommation totale de gaz CGT entre ladite impulsion 202a et l'impulsion 202a précédente,
- des premiers moyens de test destinés à vérifier si la chaudière 102 a été en état de marche entre ladite impulsion 202a et l'impulsion 202a précédente,
- des deuxièmes moyens de test destinés à vérifier si, pour les moments où la chaudière 102 était en état de marche, elle est restée dans un seul mode entre ladite impulsion 202a et l'impulsion 202a précédente,
- des premiers moyens de cumul destinés à incrémenter le compteur global dudit seul mode avec la consommation totale de gaz CGT,
- des moyens de calcul de durée destinés à calculer, pour le mode correspondant au coefficient de calibration, la durée T pour laquelle la chaudière 102 a été en état de marche et dans ledit mode,
- des premiers moyens de calcul de consommation destinés à calculer, pour le mode correspondant au coefficient de calibration, la consommation de gaz pour ledit mode selon la formule $CG = CC \times T$,
- des deuxièmes moyens de calcul de consommation destinés à calculer, pour l'autre mode, la consommation de gaz pour ledit autre mode selon la formule $CG' = CGT - CG$, et
- des deuxièmes moyens de cumul destinés à incrémenter, pour chaque mode, le compteur global dudit mode avec la consommation de gaz calculée par les premiers moyens de calcul et les deuxièmes moyens de calcul, pour ledit mode.

**Revendications**

1. Procédé d'estimation (300) de consommation de gaz d'une installation de chaudière (100) comportant:

   - une chaudière à gaz (102) comportant un premier circuit (104) délivrant du chauffage et un deuxième circuit (106) délivrant de l'eau chaude sanitaire,
   - un émetteur d'impulsions (112) pour compteur gaz, qui, à chaque impulsion, délivre le volume de gaz consommé,
   - un émetteur d'informations (114) délivrant une information représentative du mode de fonctionnement de la chaudière (102), soit le mode chauffage, soit le mode eau chaude sanitaire,
   - un émetteur d'état (116) délivrant une information représentative de l'état de la chaudière (102), soit en marche, soit à l'arrêt, et
   - une unité de calcul (110) recevant les informations de chaque émetteur (112, 114, 116) et destinée à estimer la consommation de gaz pour le chauffage et la consommation de gaz pour l'eau chaude sanitaire à partir de ces informations,

   ledit procédé (300) comportant, lorsqu'un coefficient de calibration CC pour l'un des modes a été préalablement calculé:

   - une étape d'attente (302) au cours de laquelle l'unité de calcul (110) attend de recevoir de l'émetteur d'impulsions (112), l'information selon laquelle une impulsion (202a) été générée,
   - une étape de récupération d'état (304) au cours de laquelle l'unité de calcul (110) récupère de l'émetteur d'état (116), l'état ou chaque état par lequel la chaudière (102) est passée entre ladite impulsion (202a) et l'impulsion (202a) précédente,
   - une étape de récupération de mode (306) au cours de laquelle l'unité de calcul (110) récupère de l'émetteur d'informations (114), le mode ou chaque mode par lequel la chaudière (102) est passée entre ladite impulsion (202a) et l'impulsion (202a) précédente,
   - une étape de récupération de consommation (308) au cours de laquelle l'unité de calcul (110) récupère de l'émetteur d'impulsions (112), la consommation totale de gaz CGT entre ladite impulsion (202a) et l'impulsion (202a) précédente,
- une première étape de test (310) au cours de laquelle l'unité de calcul (110) vérifie si la chaudière (102) a été en état de marche entre ladite impulsion (202a) et l'impulsion (202a) précédente,

dans le cas négatif, le processus retourne à l'étape d'attente (302), dans le cas positif,

- une deuxième étape de test (312) au cours de laquelle l'unité de calcul (110) vérifie si, pour les moments où la chaudière (102) était en état de marche, elle est restée dans un seul mode entre ladite impulsion (202a) et l'impulsion (202a) précédente,

dans le cas positif,

- une première étape de cumul (314) au cours de laquelle l'unité de calcul (110) incrémente le compteur global dudit seul mode avec la consommation totale de gaz CGT,

dans le cas négatif,

- une étape de calcul de durée (316) au cours de laquelle l'unité de calcul (110) calcule, pour le mode correspondant au coefficient de calibration, la durée T pour laquelle la chaudière (102) a été en état de marche et dans ledit mode,
- une première étape de calcul de consommation (318) au cours de laquelle l'unité de calcul (110) calcule, pour le mode correspondant au coefficient de calibration, la consommation de gaz pour ledit mode selon la formule CG = $CC \times T$,
- une deuxième étape de calcul de consommation (320) au cours de laquelle l'unité de calcul (110) calcule, pour l'autre mode, la consommation de gaz pour ledit autre mode selon la formule $CG' = CGT - CG$, et
- une deuxième étape de cumul (322) au cours de laquelle l'unité de calcul (110) incrémente, pour chaque mode, le compteur global dudit mode avec la consommation de gaz ainsi calculée pour ledit mode et le processus retourne à l'étape d'attente (302).

2. Procédé d'estimation (300) selon la revendication 1, **caractérisé en ce que** le calcul du coefficient de calibration CC d'un mode s'effectue, lorsque entre deux impulsions (202a) successives, la chaudière (102) fonctionne uniquement dans ledit mode lorsqu'elle est en état de marche, selon la formule

$$CC = \frac{CG}{t},$$ où CG est la t consommation de gaz entre les deux impulsions (202a) et où t est le temps durant lequel la chaudière (102) reste en marche et dans ledit mode entre les deux impulsions (202a).

3. Installation de chaudière (100) comportant:

- une chaudière à gaz (102) comportant un premier circuit (104) délivrant du chauffage et un deuxième circuit (106) délivrant de l'eau chaude sanitaire,
- un émetteur d'impulsions (112) pour compteur gaz, qui, à chaque impulsion, délivre le volume de gaz consommé,
- un émetteur d'informations (114) délivrant une information représentative du mode de fonctionnement de la chaudière (102), soit le mode chauffage, soit le mode eau chaude sanitaire,
- un émetteur d'état (116) délivrant une information représentative de l'état de la chaudière (102), soit en marche, soit à l'arrêt, et
- une unité de calcul (110) comportant:

  - des moyens de récupération d'état destinés à récupérer de l'émetteur d'état (116), l'état ou chaque état par lequel la chaudière (102) est passée entre ladite impulsion (202a) et l'impulsion (202a) précédente,
  - des moyens de récupération de mode destinés à récupérer de l'émetteur d'informations (114), le mode ou chaque mode par lequel la chaudière (102) est passée entre ladite impulsion (202a) et l'impulsion (202a) précédente,
  - des moyens de récupération de consommation destinés à récupérer de l'émetteur d'impulsions (112), la consommation totale de gaz CGT entre ladite impulsion (202a) et l'impulsion (202a) précédente,
  - des premiers moyens de test destinés à vérifier si la chaudière (102) a été en état de marche entre ladite impulsion (202a) et l'impulsion (202a) précédente,
  - des deuxièmes moyens de test destinés à vérifier si, pour les moments où la chaudière (102) était en état de marche, elle est restée dans un seul mode entre ladite impulsion (202a) et l'impulsion (202a) précédente,
  - des premiers moyens de cumul destinés à incrémenter le compteur global dudit seul mode avec la consommation totale de gaz CGT,
  - des moyens de calcul de durée destinés à calculer, pour le mode correspondant au coefficient de calibration, la durée T pour laquelle la chaudière (102) a été en état de marche et dans ledit mode,

- des premiers moyens de calcul de consommation destinés à calculer, pour le mode correspondant au coefficient de calibration, la consommation de gaz pour ledit mode selon la formule $CG = CC \times T$,

- des deuxièmes moyens de calcul de consommation destinés à calculer, pour l'autre mode, la consommation de gaz pour ledit autre mode selon la formule $CG' = CGT - CG$ , et

- des deuxièmes moyens de cumul destinés à incrémenter, pour chaque mode, le compteur global dudit mode avec la consommation de gaz calculée par les premiers moyens de calcul et les deuxièmes moyens de calcul, pour ledit mode.


**Patentansprüche**

1. Verfahren zur Schätzung (300) des Gasverbrauchs einer Heizkesselanlage (100), die aufweist:

- einen Gasheizkessel (102), der einen ersten Kreislauf (104), der eine Heizung liefert, und einen zweiten Kreislauf (106) aufweist, der Brauchwarmwasser liefert,

- einen Impulsgeber (112) für einen Gaszähler, der bei jedem Impuls das verbrauchte Gasvolumen liefert,

- einen Informationsgeber (114), der eine Information liefert, die für die Betriebsart des Heizkessels (102) repräsentativ ist, entweder die Heizungsbetriebsart oder die Brauchwarmwasserbetriebsart,

- einen Zustandsgeber (116), der eine Information liefert, die für den Zustand des Heizkessels (102), entweder ein- oder ausgeschaltet, repräsentativ ist, und

- eine Recheneinheit (110), die die Informationen von jedem Geber (112, 114, 116) empfängt und dazu bestimmt ist, den Gasverbrauch für die Heizung und den Gasverbrauch für das Brauchwarmwasser ausgehend von diesen Informationen zu schätzen,

wobei das Verfahren (300), wenn ein Kalibrierungskoeffizient CC für eine der Betriebsarten vorab berechnet wurde, aufweist:

- einen Warteschritt (302), während dessen die Recheneinheit (110) darauf wartet, vom Impulsgeber (112) die Information zu empfangen, gemäß der ein Impuls (202a) erzeugt wurde,

- einen Zustand-Wiedergewinnungsschritt (304), während dessen die Recheneinheit (110) vom Zustandsgeber (116) den Zustand oder jeden Zustand wiedergewinnt, durch den der Heizkessel (102) zwischen dem Impuls (202a) und dem vorhergehenden Impuls (202a) gegangen ist,

- einen Betriebsart-Wiedergewinnungsschritt (306), während dessen die Recheneinheit (110) vom Informationsgeber (114) die Betriebsart oder jede Betriebsart wiedergewinnt, durch die der Heizkessel (102) zwischen dem Impuls (202a) und dem vorhergehenden Impuls (202a) gegangen ist,

- einen Verbrauch-Wiedergewinnungsschritt (308), während dessen die Recheneinheit (110) vom Impulsgeber (112) den Gesamtgasverbrauch CGT zwischen dem Impuls (202a) und dem vorhergehenden Impuls (202a) wiedergewinnt,

- einen ersten Testschritt (310), während dessen die Recheneinheit (110) überprüft, ob der Heizkessel (102) zwischen dem Impuls (202a) und dem vorhergehenden Impuls (202a) in einem eingeschalteten Zustand war,

im negativen Fall kehrt der Prozess zum Warteschritt (302) zurück,

im positiven Fall

- einen zweiten Testschritt (312), während dessen die Recheneinheit (110) überprüft, ob für die Zeitpunkte, in denen der Heizkessel (102) im eingeschalteten Zustand war, er zwischen dem Impuls (202a) und dem vorhergehenden Impuls (202a) in einer einzigen Betriebsart geblieben ist,

im positiven Fall

- einen ersten Kumulierungsschritt (314), während dessen die Recheneinheit (110) den globalen Zähler der einzigen Betriebsart mit dem Gesamtgasverbrauch CGT inkrementiert,

im negativen Fall

- einen Dauer-Berechnungsschritt (316), während dessen die Recheneinheit (110) für die dem Kalibrierungskoeffizient entsprechende Betriebsart die Dauer T berechnet, für die der Heizkessel (102) im eingeschalteten Zustand und und in der Betriebsart war,

- einen ersten Verbrauchs-Berechnungsschritt (318), während dessen die Recheneinheit (110) für die dem Kalibrierungskoeffizient entsprechende Betriebsart den Gasverbrauch für die Betriebsart gemäß der Formel CG = CC x T berechnet,

- einen zweiten Verbrauchs-Berechnungsschritt (320), während dessen die Recheneinheit (110) für die andere Betriebsart den Gasverbrauch für die andere Betriebsart gemäß der Formel CG' = CGT - CG berechnet, und

- einen zweiten Kumulierungsschritt (322), während dessen die Recheneinheit (110) für jede Betriebsart den globalen Zähler der Betriebsart mit dem so für die Betriebsart berechneten Gasverbrauch inkrementiert und der Prozess zum Warteschritt (302) zurückkehrt.

2. Schätzverfahren (300) nach Anspruch 1, **dadurch gekennzeichnet, dass** die Berechnung des Kalibrierungskoeffizienten CC einer Betriebsart erfolgt, wenn zwischen zwei aufeinanderfolgenden Impulsen (202a) der Heizkessel (102) nur in der Betriebsart arbeitet, wenn er im eingeschalteten Zustand ist, gemäß der Formel $CC = \frac{CG}{t}$, wobei CG der Gasverbrauch zwischen den zwei Impulsen (202a) und t die Zeit ist, während der der Heizkessel (102) zwischen den zwei Impulsen (202a) eingeschaltet und in der Betriebsart bleibt.

3. Heizkesselanlage (100), die aufweist:

- einen Gasheizkessel (102), der einen ersten Kreislauf (104), der eine Heizung liefert, und einen zweiten Kreislauf (106) aufweist, der Brauchwarmwasser liefert,
- einen Impulsgeber (112) für einen Gaszähler, der bei jedem Impuls das verbrauchte Gasvolumen liefert,
- einen Informationsgeber (114), der eine Information liefert, die für die Betriebsart des Heizkessels (102) repräsentativ ist, entweder die Heizungsbetriebsart oder die Brauchwarmwasserbetriebsart,
- einen Zustandsgeber (116), der eine Information liefert, die für den Zustand des Heizkessels (102) repräsentativ ist, entweder ein- oder ausgeschaltet, und
- eine Recheneinheit (110), die aufweist:

  - Zustands-Wiedergewinnungseinrichtungen, die dazu bestimmt sind, vom Zustandsgeber (116), den Zustand oder jeden Zustand wiederzugewinnen, durch den der Heizkessel (102) zwischen dem Impuls (202a) und dem vorhergehenden Impuls (202a) gegangen ist,
  - Betriebsart-Wiedergewinnungseinrichtungen, die dazu bestimmt sind, vom Informationsgeber (114) die Betriebsart oder jede Betriebsart wiederzugewinnen, durch die der Heizkessel (102) zwischen dem Impuls (202a) und dem vorhergehenden Impuls (202a) gegangen ist,
  - Verbrauchs-Wiedergewinnungseinrichtungen, die dazu bestimmt sind, vom Impulsgeber (112) den Gesamtgasverbrauch CGT zwischen dem Impuls (202a) und dem vorhergehenden Impuls (202a) wiederzugewinnen,
  - erste Testeinrichtungen, die dazu bestimmt sind, zu überprüfen, ob der Heizkessel (102) zwischen dem Impuls (202a) und dem vorhergehenden Impuls (202a) im eingeschalteten Zustand war,
  - zweite Testeinrichtungen, die dazu bestimmt sind, zu überprüfen, ob der Heizkessel (102) für die Zeitpunkte, in denen er im eingeschalteten Zustand war, zwischen dem Impuls (202a) und dem vorhergehenden Impuls (202a) in einer einzigen Betriebsart geblieben ist,
  - erste Kumulierungseinrichtungen, die dazu bestimmt sind, den globalen Zähler der einzigen Betriebsart mit dem Gesamtgasverbrauch CGT zu inkrementieren,
  - Dauer-Berechnungseinrichtungen, die dazu bestimmt sind, für die dem Kalibrierungskoeffizienten entsprechende Betriebsart die Dauer T zu berechnen, für die der Heizkessel (102) im eingeschalteten Zustand und in der Betriebsart war,
  - erste Verbrauchs-Berechnungseinrichtungen, die dazu bestimmt sind, für die dem Kalibrierungskoeffizienten entsprechende Betriebsart den Gasverbrauch für die Betriebsart gemäß der Formel CG = CC x T zu berechnen,
  - zweite Verbrauchs-Berechnungseinrichtungen, die dazu bestimmt sind, für die andere Betriebsart den Gasverbrauch für die andere Betriebsart gemäß der Formel CG' = CGT - CG zu berechnen, und
  - zweite Kumulierungseinrichtungen, die dazu bestimmt sind, für jede Betriebsart den globalen Zähler der Betriebsart mit dem Gasverbrauch zu inkrementieren, der von den ersten Recheneinrichtungen und den zweiten Recheneinrichtungen für die Betriebsart berechnet wurde.

**Claims**

1. Method for estimating (300) the gas consumption of a boiler plant (100) comprising:

    - a gas boiler (102) comprising a first circuit (104) delivering heating and a second circuit (106) delivering sanitary hot water,
    - a pulse emitter (112) for a gas meter, which, on each pulse, delivers the volume of gas consumed,

- an information emitter (114) delivering information representative of the mode of operation of the boiler (102), either the heating mode, or the sanitary hot water mode,
- a state emitter (116) delivering information representative of the state of the boiler (102), either on, or off, and
- a computation unit (110) receiving the information from each emitter (112, 114, 116) and intended to estimate the gas consumption for the heating and the gas consumption for the sanitary hot water from this information,

said method (300) comprising, when a calibration coefficient CC for one of the modes has been previously computed:

- a waiting step (302) during which the computation unit (110) waits to receive from the pulse emitter (112) the information according to which a pulse (202a) has been generated,
- a state recovery step (304) during which the computation unit (110) recovers from the state emitter (116) the state or each state through which the boiler (102) has passed between said pulse (202a) and the preceding pulse (202a),
- a mode recovery step (306) during which the computation unit (110) recovers from the information emitter (114) the mode or each mode through which the boiler (102) has passed between said pulse (202a) and the preceding pulse (202a),
- a consumption recovery step (308) during which the computation unit (110) recovers from the pulse emitter (112) the total gas consumption CGT between said pulse (202a) and the preceding pulse (202a),
- a first test step (310) during which the computation unit (110) checks whether the boiler (102) has been in the on state between said pulse (202a) and the preceding pulse (202a),
- in the negative case, the process returns to the waiting step (302),

in the positive case,

- a second test step (312) during which the computation unit (110) checks whether, for the moments when the boiler (102) was in the on state, it has remained in a single mode between said pulse (202a) and the preceding pulse (202a),

in the positive case,

- a first aggregation step (314) during which the computation unit (110) increments the global counter for said single mode with the total gas consumption CGT,

in the negative case,

- a duration computation step (316) during which the computation unit (110) computes, for the mode corresponding to the calibration coefficient, the duration T for which the boiler (102) has been in the on state and in said mode,
- a first consumption computation step (318) during which the computation unit (110) computes, for the mode corresponding to the calibration coefficient, the gas consumption for said mode according to the formula *CG = CC x T,*
- a second consumption computation step (320) during which the computation unit (110) computes, for the other mode, the gas consumption for said other mode according to the formula *CG' = CGT - CG,* and
- a second aggregation step (322) during which the computation unit (110) increments, for each mode, the global counter for said mode with the gas consumption thus computed for said mode and the process returns to the waiting step (302).

2. Estimation method (300) according to Claim 1, **characterized in that** the computation of the calibration coefficient CC of a mode is performed when, between two successive pulses (202a), the boiler (102) operates only in said mode when it is in the on state according to the formula $CC = \dfrac{CG}{t}$ , where *CG* is the gas consumption between the two pulses (202a) and where t is the time during which the boiler (102) remains on and in said mode between the two pulses (202a).

3. Boiler plant (100) comprising:

- a gas boiler (102) comprising a first circuit (104) delivering heating and a second circuit (106) delivering sanitary hot water,
- a pulse emitter (112) for a gas meter, which, on each pulse, delivers the volume of gas consumed,
- an information emitter (114) delivering information representative of the mode of operation of the boiler (102), either the heating mode, or the sanitary hot water mode,
- a state emitter (116) delivering information representative of the state of the boiler (102), either on, or off, and
- a computation unit (110) comprising:

  - state recovery means intended to recover from the state emitter (116) the state or each state through which the boiler (102) has passed between said pulse (202a) and the preceding pulse (202a),

- mode recovery means intended to recover from the information emitter (114) the mode or each mode through which the boiler (102) has passed between said pulse (202a) and the preceding pulse (202a),

- consumption recovery means intended to recover from the pulse emitter (112) the total gas consumption CGT between said pulse (202a) and the preceding pulse (202a),

- first test means intended to check whether the boiler (102) has been in the on state between said pulse (202a) and the preceding pulse (202a),

- second test means intended to check whether, for the moments when the boiler (102) was in the on state, it has remained in a single mode between said pulse (202a) and the preceding pulse (202a),

- first aggregation means intended to increment the global counter for said single mode with the total gas consumption CGT,

- duration computation means intended to compute, for the mode corresponding to the calibration coefficient, the duration T for which the boiler (102) has been in the on state and in said mode,

- first consumption computation means intended to compute, for the mode corresponding to the calibration coefficient, the gas consumption for said mode according to the formula $CG = CC \times T$,

- second consumption computation means intended to compute, for the other mode, the gas consumption for said other mode according to the formula $CG' = CGT - CG$, and

- second aggregation means intended to increment, for each mode, the global counter for said mode with the gas consumption computed by the first computation means and the second computation means for said mode.

Fig. 1

Fig. 5

Fig. 4

Fig. 2

Fig. 3